# EUROPEAN PATENT SPECIFICATION

(11) **EP 2 027 643 B1**
(45) Date of publication and mention of the grant of the patent: **09.06.2010**
(21) Application number: 07734193.1
(22) Date of filing: 20.03.2007
(51) Int. Cl.: H02K 7/18, F01D 15/10

(54) **BLADE-TYPE ELECTRIC MOTOR-GENERATOR**
ELEKTROMOTOR-GENERATOR MIT FLÜGELN
MOTEUR-GÉNÉRATEUR ÉLECTRIQUE DU TYPE À PALES

(30) Priority: 25.05.2006 IT CR20060014
(43) Date of publication of application: 25.02.2009
(73) Proprietor: Fittipaldi, Vincenzo, Cesate (IT); Legnani, Roberto, 21047 Saronno (IT)
(72) Inventor: Fittipaldi, Vincenzo, Cesate (IT); Legnani, Roberto, 21047 Saronno (IT)
(74) Representative: Marcio', Paola
(86) International application number: PCT/IB2007/000872
(87) International publication number: WO 2007/138395

(56) References cited:
- US-A- 3 349 247
- US-A- 4 577 116

## Description

The invention concerns the field of electric motors. More specifically, the purpose of the invention is a new type of reversible electric motor, suitable for operating as well as a fluid machine and especially as a pump (or compressor) or driving machine.

In the prior art, electric motors and generators are used in a range of different fields and in all power classes. Some electric motors (for example the DC and permanent-magnet motors) are also known to be reversible, i.e. they can also operate as electric current generators.

A very common application of electric motors consists in driving machines like fans, pumps and compressors: an example is given by common motor-driven pumps. In the same field, reversible electric motors are also coupled to reversible fluid machines, like e.g. hydraulic turbines that can reverse their direction of rotation and also operate as pumps. Such a unit can operate both as a motor-pump and turbine-generator.

Another particular field of use of the invention is that of the electric traction of vehicles and cars. In recent years, electric-powered cars have become of extreme interest, and this is considered one of the most interesting solutions for future developments in the automotive industry. Electric motors do not produce exhaust fumes and local pollution, are silent and allow a considerable simplifying of the vehicle (they do not require a clutch, a gearbox, etc...). An electric car is considered a zero-emissions vehicle, and can access town and city centres that are closed to traffic, thereby overcoming a problem which is now affecting drivers to an increasing extent.

The direct-current permanent-magnet motor, in particular, has a number of characteristics that make it especially suitable for vehicle traction: it delivers high torque at low rotation speeds, useful for start and breakaway; it is compact, it can also operate as a brake and/or generator and thus permits to recover a certain amount of energy during deceleration.

In this field, however, there are limits substantially due to the weight and overall dimensions of the batteries, forcing to use motors of no more than a few dozen kW. This power shows to be insufficient on medium/large vehicles, and, generally speaking, leaves the need for an extra power for accelerating, overtaking and emergency manoeuvres. It should also be borne in mind that a modern car is burdened by a large number of accessories, including the air-conditioning system, which demand a lot of energy.

Currently such limit is overcome by hybrid vehicles, that is by vehicles provided with an internal combustion engine that can operate together with the electric motor, with the drawback, however, of a more complicated and expensive vehicle having actually two motors.

As regards, more specifically, aspects relating to the manufacture of direct-current motors with permanent-magnet rotor, the prior art document US 6.049.149 describes a brushless DC motor with a permanent-magnet rotor and a pair of wound-wire stators, arranged on opposite sides of the rotor, having Hall effect sensor control. US-A-9 577 116 relates to an electric motor-generator that can operate with only a single fluid.

The adoption of two stators at the sides of the rotor permits to double the number of poles and to obtain greater torque and power, dimensions being equal. Nevertheless, the previously summarised drawbacks remain.

The purpose of the invention is to overcome the known state of the art, and its limitations, by means of a newly-conceived motor-generator substantially suitable for:
- operating directly as a fluid operating machine (pump or compressor) without being coupled to an external machine;
- operating in a reversible way, both as an electric motor and as a generator;
- providing, when used as a motor, greater power availability, compared to the rated electric power, useful for example in the traction industry.

Further purposes of the invention are to make a motor that is easy to build, and with high power output in relation to its weight and size.

The purposes are achieved with the electric motor-generator of claim 1. Further preferred embodiments of the invention are characterized in the remaining claims.

Preferably, the rotor consists of a plurality of magnets, each extended over a determinate round sector; the blades are slide-fitted in the spaces between one magnet and another.

Again preferably, the blades are substantially made with a number of sliding magnets, separated from the actual rotor magnets by means of non-magnetic spacers, for example made of teflon or ceramic material.

The motor can be made with modular structure, with separated compression or expansion chambers, with dedicated inlets and outlets. This way the motor is able to also process different kinds of fluids.

The motor - generator according to the invention achieves the above purposes. In particular, it offers the advantages described below.

A first advantage is that the motor can operate directly, i.e., without being connected to another machine, such as a pump or compressor of a gas or a liquid, as the rotor itself, thanks to the moving blades, represents the impeller.

Another advantage consists in the possible use as a driving machine, with a liquid or gas fluid under pressure being supplied to the motor. This operating mode is also possible together with electric drive, to deliver a supplementary mechanical power, with respect to the rated power of "electric only" operation.

The motor is also fully reversible, and can also operate as an electric generator, thus receiving mechanical power from the shaft and producing electricity.

The advantages are particularly useful, but not limited to, the automotive industry, for a purely electric or hybrid vehicle. Because it can operate as a pump or compressor, including with different fluids, the motor can replace a number of auxiliaries such as air-conditioning system compressor, oil pump, water pump, etc.... The capacity to use a fluid under pressure as motor fluid can be exploited to have additional power for short periods of time, for example for overtaking; furthermore, the motor can operate as a brake or act as a generator and recover energy when the vehicle is braking.

The invention is now described in greater detail with the help of the illustrations, in which:
Fig. 1 schematically represents a longitudinal section of a motor-generator according to the invention, and shows the main component parts;
Fig. 2 schematically shows a cross section, according to a plane perpendicular to the axis, of the motor of Fig. 1.

With reference to the figures, a motor-generator is shown according to the invention, which essentially comprises an armature 1, a permanent-magnet rotor 2 and two wound-wire stators 3 and 4, arranged on opposite sides of the rotor 2.

The stators 3 and 4 have a suitable number of windings 5, which can be driven in direct current (DC) by a specific circuit, not shown. Control is entrusted to an electronic system which, preferably, is of the type described in patent No. IT-1304969 by one of the applicants.

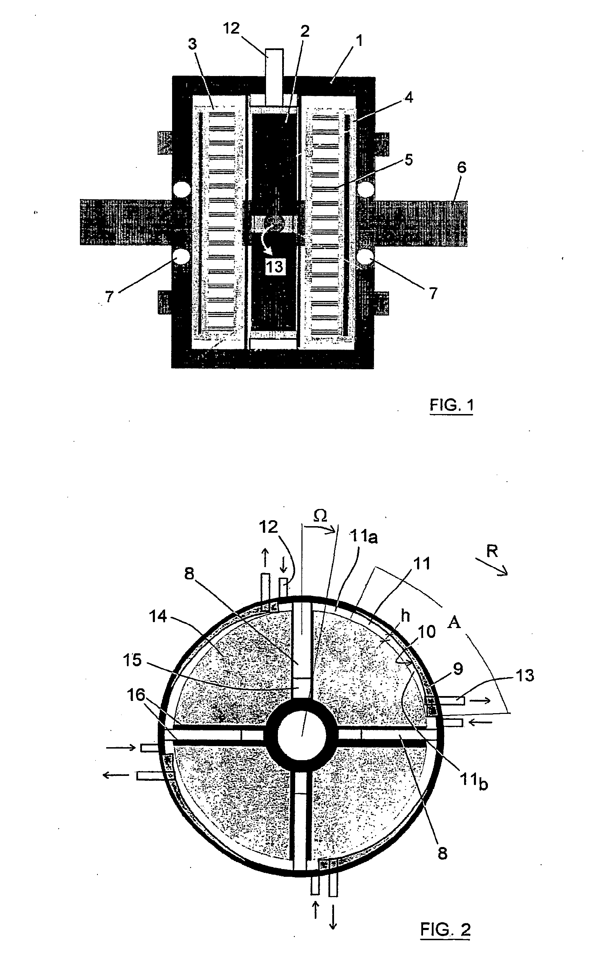

The rotor 2 is associated with a motor shaft 6 running on bearings 7. The direction of rotation of the rotor 2 is unique and is indicated by the arrow R in Fig. 2. The position of the rotor 2 with respect to the armature 1 can be defined by the angular coordinate Ω shown in Fig. 2.

The rotor 2 has a plurality of blades 8, which extend in a substantially radial direction from the rotor towards the armature 1, and are movable in a radial direction.

There are a variable number of blades 8, depending on the project; in the example the rotor comprises four blades spaced at 90 degrees.

The armature 1, on the inner part in ferromagnetic material, has respective supporting profiles 9 for the moving blades 8, facing the rotor 2.

Each supporting profile 9, as seen in Fig. 2, extends along an arc A. The radial thickness of the profile 9 varies in a monotone way along said arc A, from an initial section in which the profile 9 practically lies on the armature 1, to an end section where clearance between the profile 9 and the rotor 2 is minimum.

The supporting profile 9, in other words, has a surface 10, facing the rotor 2, with a curved pattern, preferably a circular arc, delimiting a chamber 11 in the space between the rotor 2 and the armature 1.

Said chamber 11 has a radial dimension or height h (Fig. 2), corresponding to the clearance between the rotor 2 and the facing surface 10, and said height h is variable with the angular coordinate Ω between a maximum and a minimum value. Said height h, as can be seen, gradually drops along the arc A of extension of profile 9, following the direction of rotation R of the motor.

A portion 11 a having a constant height, and a portion 11 b where the height depends on the angular position Ω decreasing in the direction of rotation R, can substantially be seen into the chamber 11.

The armature 1 has openings that communicate with the chamber 11, for inlet/outlet of liquid or gaseous fluids like e.g. water, steam, oil or any other gas or liquid.

Each chamber 11 has at least a first opening 12 and a second opening 13. The first opening 12 communicates with the portion 11a with constant height; the second opening 13 communicates with portion 11b, and is preferably located near the end of said portion 11b, where the height h is minimum or close to minimum value.

An arc portion can also be provided at the end of the curved section of the portion 11 b, instead of the step which can be seen in Fig. 2, to better accompany the blade 8 at the end of the movement along the profile 9.

In the illustrated embodiment, the rotor 2 comprises four permanent magnets 14, which extend substantially over a sector of 90 degree each, and among which an equal number of moving blades 8 is fitted. The moving blades 8 are also made with magnets, and are slide-fitted in channels 15 between one magnet and another. The blades 8 are separated from the magnets 14 by non-magnetic spacers 16.

The blades 8 are attracted by magnetic force against the armature 1; in one embodiment of the invention, thrust springs can also be fitted, inserted in the channels 15.

The motor can also be made to compress or expand a plurality of different fluids at the same time, exploiting the fact that it comprises a plurality of chambers 11 separate from one another (four in the example shown) or the motor can be made in modular shape, by means of a plurality of units like the one of Fig. 1.

Other construction details are not described, inasmuch as they belong to the state of the art or are in any case accessible to technicians in the field.

Operation is as follows: the unit can operate simply as an electric motor with permanent magnets, of the known type, or as a generator of electric current, in the event of the rotor 2 being driven by the shaft 6.

The unit is also able to operate as a fluid operating machine: in particular it can compress a gas or a liquid supplied through the openings 12.

Looking at Fig. 2, in fact, it can be seen that the rotation of the rotor 2, with the blades 8 pushed in support on the surfaces 10 of the profiles 9, can compress the fluid contained in the chambers 11, with an operating principle that is substantially similar to that of a positive-displacement blower pump. The volume of fluid, moving along the angular coordinate Ω, is compressed inside the portion 11b of the chamber, by effect of the gradual reduction of height h. The compressed fluid is then discharged from the openings 13, as shown by the arrows.

Due to a complete rotation of the rotor 2, the same compression effect is obtained which is repeated in the various chambers 11 (four in the example embodiment shown). The arrows in Fig. 2 indicate fluid inlet and outlet.

Vice versa, the introduction of a fluid under pressure in the chambers 11, by causing a thrust on the blades 8, can start the rotation of the rotor 2, with an operation similar to a positive-displacement motor.

A preferred application consists in driving electric or hybrid vehicles, in which the motor according to the invention can be housed in the motor compartment or even coupled directly to the wheels.

Thanks to its capacity to also operate as a pump or a compressor, the motor can perform the functions of a number of auxiliaries such as air-conditioning system compressor, water pump, etc...

## Claims

1. Electric motor-generator comprising:
- an outer armature (1);
- a permanent-magnet rotor (2);
- a pair of wound-wire stators (3, 4), arranged from opposite sides of the rotor (2) and integral with the armature (1);
- a control system;
wherein:
- the rotor (2) comprises a plurality of moving blades (8), directed in a substantially radial direction from the rotor to the armature (1), and sliding in a radial direction with respect to said rotor (2);
- the armature (1) has at least one pair of fluid inlet and outlet openings (12, 13), **characterized in that**:
- the armature (1) has a plurality of respective supporting profiles (9) for said moving blades (8), arranged to define an equal number of compression or expansion chambers (11), with variable volume, arranged in the space between the rotor (2) and the armature (1);
wherein each chamber (11) comprises a portion (11a) of constant height, and a portion (11b) in which the height gradually decreases in the direction of rotation (R) of the rotor (2), and
wherein each chamber (11) has a first opening (12) and a second opening (13) for fluid inlet and outlet; the first opening (12) communicates with said portion (11a) of constant height of the chamber (11); the second opening (13) communicates with said portion (11b) with variable height.

2. Motor as in claim 1, wherein the second opening (12) is located near the end of said portion (11b) of the chamber (11), where the height (h) of said chamber (11) is minimum or close to minimum value.

3. Motor as in any of the previous claims, wherein the rotor (2) comprises a plurality of permanent magnets (14) which substantially extend over an angular sector, and among which are fitted an equal number of moving blades (8) inserted sliding in channels (15) between one magnet and the other.

4. Motor as in claim 3, wherein the blades (8) are separated from the magnets (14) of the rotor (2) by means of non-magnetic spacers (16).

5. Motor as in claims 3 or 4, wherein the moving blades (8) are pushed against the supporting profiles (9) by thrust springs fitted in said channels (15).

6. Motor as in any of the previous claims, wherein the blades (8) are made up of magnets and the supporting profile (9) is made of ferromagnetic material.

7. Electric or hybrid vehicle, comprising an electric motor-generator according to at least one of the previous claims.

## Patentansprüche

1. Elektromotor-Generator bestehend aus
- einer äußeren Armatur (1);
- einem Dauermagnet-Rotor (2)
- einem Paar Wickelstatoren (3, 4), angeordnet an gegenüberliegenden Seiten des Rotors (2) und eingebaut in die Armatur (1);
- einem Steuersystem:
worin:
- der Rotor (2) eine Mehrzahl von Laufschaufeln (8) umfasst, die in eine im wesentlichen radiale Richtung vom Rotor zur Armatur (1) gerichtet sind und in eine radiale Richtung zu genanntem Rotor (2) gleiten;
- die Armatur (1) mindestens ein Paar Flüssigkeitseinlass-und Auslassöffnungen (12, 13) hat, **dadurch gekennzeichnet, dass**:
- die Armatur (1) eine Mehrzahl von entsprechenden Trägerprofilen (9) für genannte Laufschaufeln (8) hat, derart angeordnet, dass sie eine gleich große Anzahl an Kompressions- oder Expansionsräume (11) variablen Volumens bestimmen, angeordnet in dem Bereich zwischen dem Rotor (2) und der Armatur (1);
worin jeder Raum (11) einen Bereich (11a) konstanter Höhe und einen Bereich (11b), in dem die Höhe stufenweise in Richtung der Drehung (R) des Rotors (2) abnimmt, umfasst und
worin jeder Raum (11) eine erste Öffnung (12) und eine zweite Öffnung (13) für den Flüssigkeitseinlass und -auslass aufweist, wobei die erste Öffnung (12) mit genanntem Bereich (11a) mit konstanter Höhe des Raumes (11) verbunden ist und die zweite Öffnung (13) mit genanntem Bereich (11b) mit variabler Höhe verbunden ist.

2. Motor nach Anspruch 1, worin sich die zweite Öffnung (12) in der Nähe des genannten Bereichs (11b) des Raumes (11) befindet, wo die Höhe (h) des genannten Raumes (11) die Mindesthöhe oder nahezu die Mindesthöhe ist.

3. Motor nach einem der vorstehenden Ansprüche, worin der Rotor (2) aus einer Mehrzahl von Dauermagneten (14) besteht, die sich im wesentlichen über einen winkligen Bereich erstrecken und zwischen denen eine gleich große Anzahl an Laufschaufeln (8) angebracht ist, verschiebbar eingesetzt in Kanäle (15) zwischen einem Magnet und einem anderen.

4. Motor nach Anspruch 3, worin die Laufschaufeln (8) von den Magneten (14) des Rotors (2) durch nicht magnetische Distanzstücke (16) getrennt sind.

5. Motor nach Anspruch 3 oder 4, worin die Laufschaufeln (8) gegen die Trägerprofile (9) durch in genannten Kanälen (15) angebrachte Druckfedern geschoben werden.

6. Motor nach einem der vorstehenden Ansprüche, worin die Laufschaufeln (8) aus Magneten bestehen und das Trägerprofil (9) aus ferromagnetischem Material ist.

7. Elektro- oder Hybridfahrzeug, bestehend aus einem Elektromotor-Generator nach mindestens einem der vorstehenden Ansprüche.

## Revendications

1. Moteur-générateur électrique comprenant :
- une armature externe (1) ;
- un rotor à aimant permanent (2) ;
- une paire de stators à fil bobiné (3, 4), disposés des côtés opposés du rotor (2) et intégrés à l'armature (1) ;
- un système de contrôle ;
où :
- le rotor (2) comprend une pluralité de lames mobiles (8), orientées dans une direction substantiellement radiale à partir du rotor vers l'armature (1), et coulissant dans une direction radiale par rapport audit rotor (2) ;
- l'armature (1) possède au moins une paire d'orifices d'entrée et de sortie de fluide (12, 13);
**caractérisé par le fait que** :
- l'armature (1) possède une pluralité de profilés de support respectifs (9) pour lesdites lames mobiles (8), disposés de manière à définir un nombre égal de chambres de compression ou d'expansion (11), avec un volume variable, disposées dans l'espace entre le rotor (2) et l'armature (1) ;
où chaque chambre (11) comprend une portion (11a) de hauteur constante et une portion (11 b) dans laquelle la hauteur diminue graduellement dans la direction de rotation (R) du rotor (2), et
où chaque chambre (11) possède une première ouverture (12) et une deuxième ouverture (13) pour l'entrée et la sortie de fluide ; la première ouverture (12) communique avec ladite portion (11a) à hauteur constante de la chambre (11); la deuxième ouverture (13) communique avec ladite portion (11b) à hauteur variable.

2. Moteur selon la revendication 1, où la deuxième ouverture (12) est située proche de l'extrémité de ladite portion (11b) de la chambre (11), où la hauteur (h) de ladite chambre (11) est minimale ou proche de la valeur minimale.

3. Moteur selon l'une des revendications précédentes, où le rotor (2) comprend une pluralité d'aimants permanents (14) qui s'étendent substantiellement sur un secteur angulaire et parmi lesquels est disposé un nombre égal de lames mobiles (8) insérées en coulissant dans des canaux (15) entre un aimant et l'autre.

4. Moteur selon la revendication 3, où les lames (8) sont séparées des aimants (14) du rotor (2) à l'aide d'entretoises amagnétiques (16).

5. Moteur selon la revendication 3 ou 4, où les lames mobiles (8) sont poussées contre les profilés de support (9) par des ressort de poussée disposés dans lesdits canaux (15).

6. Moteur selon l'une des revendications précédentes, où les lames (8) sont réalisées en aimants et le profilé de support (9) est réalisé en matériau ferromagnétique.

7. Véhicule électrique ou hybride comprenant un moteur-générateur électrique selon une ou plusieurs des revendications précédentes.
